# EUROPEAN PATENT APPLICATION

(11) **EP 2 374 761 A2**
(43) Date of publication of application: **12.10.2011**
(21) Application number: 11250093.9
(22) Date of filing: 27.01.2011
(51) Int. Cl.: C02F 1/44, C02F 101/10, C02F 103/08, C02F 1/42, C02F 9/00

(54) **Zero liquid discharge water treatment system and method**

(30) Priority: 27.01.2010 US 694672
(71) Applicant: Milton Roy Company, Ivyland, PA 18974 (US)
(72) Inventor: Cordatos, Haralambos, Colchester, CT 06415 (US); Sundel, Tomothy N., West Hartford, CT 06117 (US); Irish, James R., Middlefield, CT 06455 (US); Yu, Xiaomei, Glastonbury, CT 06033 (US); Ma, Zidu, Ellington, CT 06029 (US)
(74) Representative: Tomlinson, Kerry John

(57) **Abstract**

A treatment system (10) includes a feed source (12), a first treatment unit (16) for separating a feed into a first product and a concentrated feed containing less than about 7% total dissolved solids, and a membrane distillation unit (18) for separating the concentrated feed into a second product and a superconcentrated feed containing at least about 14% total dissolved solids. The membrane distillation unit includes hollow fiber membranes (44) having inner bores for receiving the concentrated feed and membrane walls for allowing vapor transmission of distillate. A method includes delivering feed to a first treatment unit where it is separated into first product and concentrated feed streams; delivering the concentrated feed to internal bores of hollow fiber membranes where it is separated into second product and superconcentrated feed streams as vapor passes across the hollow fiber membranes; delivering the superconcentrated feed to a liquid removal unit; and collecting the first and second product streams.

## Description

### BACKGROUND

Various water treatment technologies are currently used to treat brine, saltwater, brackish water and different forms of wastewater. One commonly used treatment includes reverse osmosis. Reverse osmosis is the process of forcing a solvent from a region of high solute concentration through a semipermeable membrane to a region of low solute concentration by applying a pressure in excess of the osmotic pressure. This process requires that a high pressure be exerted on the high concentration side of the membrane, usually 2-17 bar (30-250 psi) for fresh and brackish water, and 40-70 bar (600-1000 psi) for seawater, which has around 24 bar (350 psi) natural osmotic pressure that must be overcome.

Due to the high pressures necessary for operation, reverse osmosis can only force solvent through the membrane up to a certain solute concentration threshold. Once the feed solution (brine, saltwater, wastewater, etc.) reaches a certain solute concentration, the pressure requirements become too high to continue reverse osmosis treatment without damaging the membranes or incurring huge losses in efficiency. Depending on the feed solution, operating pressures become too high for feed solutions having solute concentrations of between about 5% and 7% by weight. Once this solute concentration is reached, the feed solution is typically sent to an evaporation pond where any remaining water evaporates, leaving behind the solute in solid form. Depending on the scale of operation, evaporation ponds can take up dozens of acres of land. The evaporated water is generally not reclaimed. Other final processing can include brine concentration, crystallization and filter press deployment, where some additional solvent is recovered at significant cost. Due to the limitations of current water treatment technologies, such as reverse osmosis, processes that improve solvent (i.e. clean water) recovery or yield can greatly increase efficiencies and reduce overall treatment system costs.

### SUMMARY

A water treatment system includes a feed solution source, a first treatment unit and a membrane distillation unit. The feed solution source provides a feed solution. The first treatment unit separates the feed solution into a first liquid product stream and a concentrated feed solution stream containing less than about 7% total dissolved solids by weight. The membrane distillation unit separates the concentrated feed solution stream into a second liquid product stream and a superconcentrated feed solution stream containing at least about 14% total dissolved solids by weight. The membrane distillation unit includes a plurality of hollow fiber membranes spanning the membrane distillation unit. Each hollow fiber membrane has an inner bore for receiving the concentrated feed solution stream and a membrane wall for allowing vapor transmission of distillate from a bore side of the hollow fiber membrane to a shell side of the hollow fiber membrane.

A zero liquid discharge water treatment system includes a water source, a first treatment unit, a membrane distillation unit, a final processing unit and at least one product collection vessel. The water source provides an aqueous fluid containing dissolved solids. The first treatment unit separates the aqueous fluid into a first product water stream and a concentrated aqueous fluid stream containing less than about 7% total dissolved solids by weight. The membrane distillation unit separates the concentrated aqueous fluid stream into a second product water stream and a superconcentrated aqueous fluid stream containing at least about 14% total dissolved solids by weight. The membrane distillation unit includes a plurality of hollow fiber membranes spanning the membrane distillation unit. Each hollow fiber membrane has an inner bore for receiving the concentrated aqueous fluid stream and a membrane wall for allowing vapor transmission of water from a bore side of the hollow fiber membrane to a shell side of the hollow fiber membrane. The final processing unit removes water from the superconcentrated aqueous fluid stream. The at least one product collection vessel receives at least one product water stream from the first treatment unit or the membrane distillation unit.

A method of treating a feed solution includes delivering the feed solution to a first treatment unit. The first treatment unit separates the feed solution into a first product stream and a concentrated feed solution stream. The method also includes delivering the concentrated feed solution stream to internal bores of hollow fiber membranes within a membrane distillation unit. Vapor from the concentrated feed solution stream passes across membrane walls of the hollow fiber membranes to collect as distillate, separating the concentrated feed solution stream into a second product stream and a superconcentrated feed solution stream. The method further includes delivering the superconcentrated feed solution stream to a liquid removal unit and collecting the first and second product streams.

### BRIEF DESCRIPTION OF THE DRAWINGS

FIG. 1 is a schematic illustration of a membrane distillation system.

FIG. 2 is a schematic illustration of a membrane distillation module.

FIG. 3 is a cross-sectional view of a membrane distillation module.

FIG. 4 is an expanded sectional view of a hollow fiber membrane which allows vapor transmission.

FIG. 5A is a graph illustrating local solute concentration within a membrane distillation module having shell side feed solution flow.

FIG. 5B is a graph illustrating local solute concentration within a membrane distillation module having bore side feed solution flow.

FIG. 6A is a schematic illustration of a water treatment system having a downstream membrane distillation unit.

FIG. 6B is another schematic illustration of a water treatment system having a downstream membrane distillation unit.

FIG. 7 is a flow diagram illustrating a method for water treatment using downstream membrane distillation.

### DETAILED DESCRIPTION

The present invention provides a water treatment system and method capable of increasing clean water recovery, reducing operating costs and yielding superior product water. The present invention utilizes membrane distillation downstream from another water treatment process to improve water recovery yield and purity while reducing the scale of subsequent processing steps to grant overall cost savings.

Unless specified otherwise, all percentages listed in this patent application indicate percentage by weight.

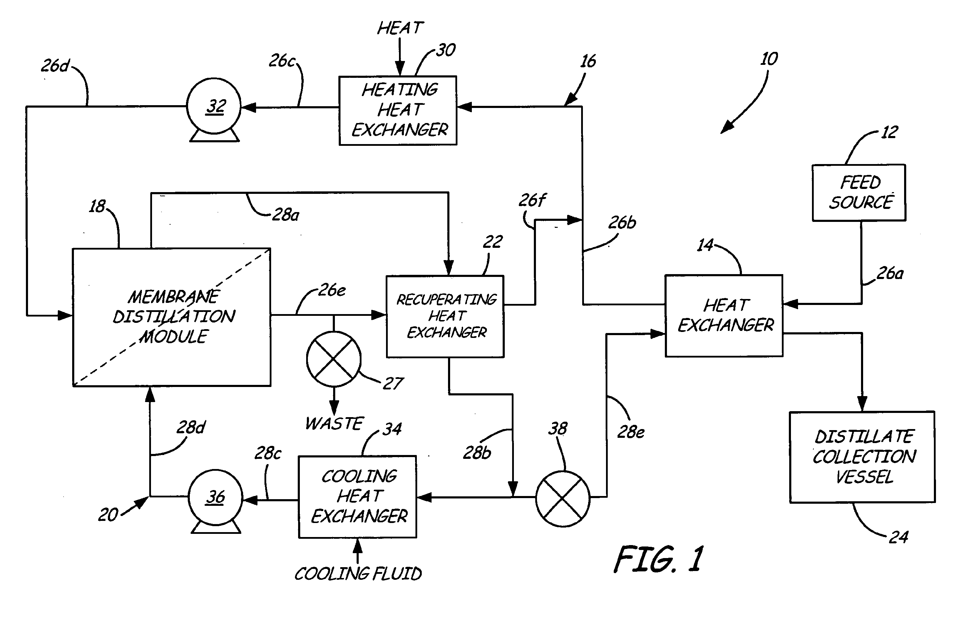

In order to facilitate a better understanding of the present invention, a description of membrane distillation is provided. FIG. 1 illustrates a schematic diagram of one embodiment of membrane distillation system 10. Membrane distillation system 10 is a direct contact membrane distillation (DCMD) system. Membrane distillation system 10 can be configured to operate as described in U.S. Patent No. 7,608,185 and EP-A-2158957.

Membrane distillation system 10 includes feed source 12, optional pre-heating heat exchanger 14, feed recirculation loop 16, membrane distillation module 18, distillate recirculation loop 20, recuperating heat exchanger 22, distillate collection vessel 24, feed conveyance lines 26a-26f and distillate conveyance lines 28a-28e. Feed solution is introduced into membrane distillation system 10 from feed source 12 via feed conveyance line 26a. Feed source 12 is a vessel or tank containing a feed solution such as brine, saltwater, brackish water or wastewater. The feed solution can be filtered before or as it is added to membrane distillation system 10. After entering membrane distillation system 10, the feed solution passes through pre-heating heat exchanger 14. The feed solution can be heated in pre-heating heat exchanger 14 by absorbing heat from distillate that has exited recuperating heat exchanger 22 and distillate recirculation loop 20. As explained below, this distillate has a higher temperature than the incoming feed solution so heat can be transferred from the distillate to the feed solution in pre-heating heat exchanger 14. From pre-heating heat exchanger 14, the feed solution travels through conveyance line 26b and enters feed recirculation loop 16.

Feed recirculation loop 16 includes heating heat exchanger 30, feed pump 32, membrane distillation module 18 and recuperating heat exchanger 22. The feed solution enters feed recirculation loop 16 through feed conveyance line 26b and passes through heating heat exchanger 30. The feed solution is heated in heating heat exchanger 30 by heat from a heat source. In some embodiments, the heat source can be steam or hot water. In exemplary embodiments, the steam or hot water can be a waste heat source generated by other power plant or industrial plant systems. Once heated, the feed solution travels through feed conveyance line 26c to feed pump 32. Feed pump 32 draws and pumps the feed solution through feed recirculation loop 16. Membrane distillation does not require elevated pressure levels, so feed pump 32 merely needs to circulate the feed solution through feed recirculation loop 16. The feed solution passes through feed conveyance line 26d and enters membrane distillation module 18.

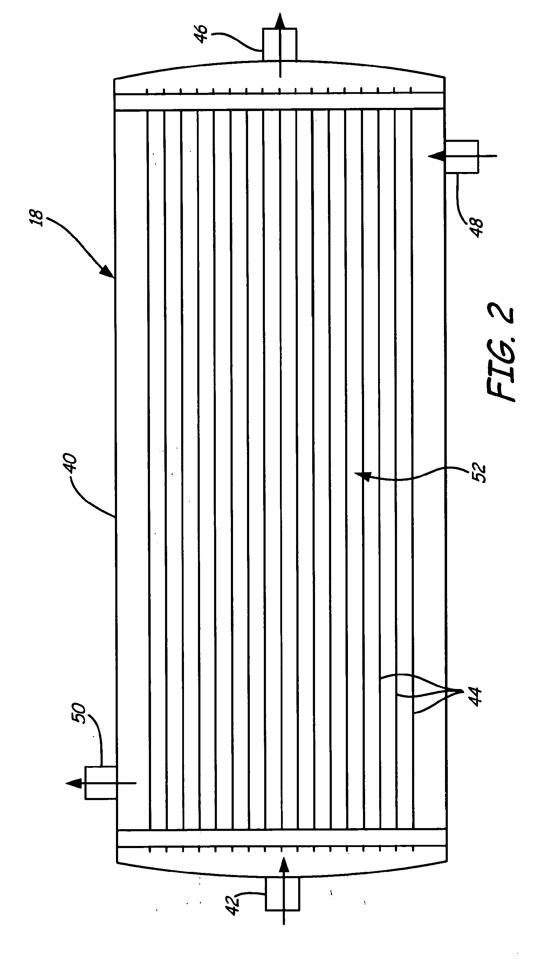

Membrane distillation module 18 is divided into a feed solution side and a distillate side. In a typical arrangement, a plurality of hollow fiber membranes separates the feed solution side from the distillate side. Vapor pressure differentials between the feed solution side of the hollow fiber membranes and the distillate side of the membrane cause vapor from the feed solution on the feed solution side of the membranes to pass through the hollow fiber membranes and condense and collect as distillate on the distillate side of the membranes. The membrane distillation process is described in additional detail below with reference to FIGS. 2, 3 and 4. The feed solution leaving membrane distillation module 18 is more concentrated than the feed solution that entered membrane distillation module 18 as some vapor has left the feed solution and transmitted to the distillate side of the membranes. This concentrated feed solution travels through feed conveyance line 26e. The concentrated feed solution is either emptied to waste through waste valve 27 or continues through feed conveyance line 26e to recuperating heat exchanger 22. In recuperating heat exchanger 22, the concentrated feed solution is heated by absorbing heat from the distillate that has exited membrane distillation module 18. This distillate typically has a higher temperature than the concentrated feed solution because the distilled vapor carries thermal energy as it transmits across the hollow fiber membranes. Thus, heat is transferred from the distillate to the concentrated feed solution in recuperating heat exchanger 22. After exiting recuperating heat exchanger 22, the concentrated feed solution enters feed conveyance line 26f and is returned to feed conveyance line 26b to mix with fresh feed solution and/or travel through feed circulation loop 16 again.

Distillate recirculation loop 20 includes cooling heat exchanger 34, distillate pump 36, membrane distillation module 18, recuperating heat exchanger 22 and valve 38. After vapor from the feed solution transmits across the hollow fiber membranes, the vapor condenses as distillate on the distillate side of membrane distillation module 18. The distillate exits membrane distillation module 18 and travels to recuperating heat exchanger 22 via distillate conveyance line 28a. Because the vapor carries thermal energy, the distillate has an elevated temperature as it exits membrane distillation module 18. The distillate gives up thermal energy to the concentrated feed solution in recuperating heat exchanger 22 and thereby cools. The distillate exits recuperating heat exchanger 22 and travels to cooling heat exchanger 34 via distillate conveyance line 28b. The distillate is further cooled in cooling heat exchanger 34. In some embodiments, heat drawn from the distillate by cooling heat exchanger 34 is expelled to the atmosphere or surface water. Once cooled, the distillate travels through distillate conveyance line 28c to distillate pump 36. Distillate pump 36 draws and pumps the distillate through distillate recirculation loop 20. Membrane distillation does not require elevated pressure levels, so distillate pump 36 merely needs to circulate the distillate through distillate recirculation loop 20. The distillate passes through conveyance line 28d and enters membrane distillation module 18.

In one embodiment of membrane distillation module 18, the feed solution and the distillate flow in generally opposite directions (countercurrent flow) both to provide the largest possible vapor pressure differentials across the hollow fiber membranes and to allow downstream recuperation of some heat from the heated distillate, thereby improving the efficiency of membrane distillation system 10. As vapor from the feed solution transmits across the hollow fiber membranes, it condenses and collects as distillate on the distillate side of membrane distillation module 18. The distillate travels to recuperating heat exchanger 22 via conveyance line 28a as described above.

A portion of the distillate can be collected as product after it exits recuperating heat exchanger 22. Valve 38 controls the flow of the distillate after exiting recuperating heat exchanger 22. The distillate can flow to cooling heat exchanger 34 or through conveyance line 28e. When optional pre-heating heat exchanger 14 is present, the distillate flows through pre-heating heat exchanger 14 and transfers heat to the feed solution. The distillate is eventually collected in distillate collection vessel 24. The distillate may undergo additional filtration or disinfection treatments prior to collection in distillate collection vessel 24. Distillate collection vessel 24 can be used for short-term or long-term storage of the distillate.

FIG. 2 illustrates a schematic diagram of one embodiment of membrane distillation module 18 suitable for use in membrane distillation system 10. Membrane distillation module 18 includes module casing 40, feed solution inlet 42, a plurality of hollow fiber membranes 44, feed solution outlet 46, distillate inlet 48 and distillate outlet 50. Module casing 40 defines module volume 52 of membrane distillation module 18 and contains the feed solution and distillate within module volume 52. The feed solution enters membrane distillation module 18 and module volume 52 through feed solution inlet 42. A plurality of hollow fiber membranes 44 are arranged within and span a significant portion of module volume 52. The feed solution travels down inner bores of hollow fiber membranes 44 from feed solution inlet 42 to feed solution outlet 46. The inner bores of hollow fiber membranes 44 are on a feed side of module volume 52. Hollow fiber membranes 44 allow vapor but not liquid to transmit across the membranes. As the feed solution travels through the inner bores of hollow fiber membranes 44, vapor from the feed solution passes across hollow fiber membranes 44 and enters a distillate side of module volume 52. The vapor crosses hollow fiber membranes 44 and condenses and collects as distillate on the distillate side of module volume 52.

While the feed solution is circulating through the inner bores of hollow fiber membranes 44 (the feed side of module volume 52), distillate is circulating on the distillate (shell) side of module volume 52. The distillate enters membrane distillation module 18 and module volume 52 through distillate inlet 48. The distillate flows through module volume 52 on the shell side of hollow fiber membranes 44. When the distillate comes into contact with vapor that has crossed hollow fiber membranes 44, the lower temperature of the distillate causes the vapor to condense. The condensed vapor mixes with and joins the distillate and eventually exits module volume 52 at distillate outlet 50.

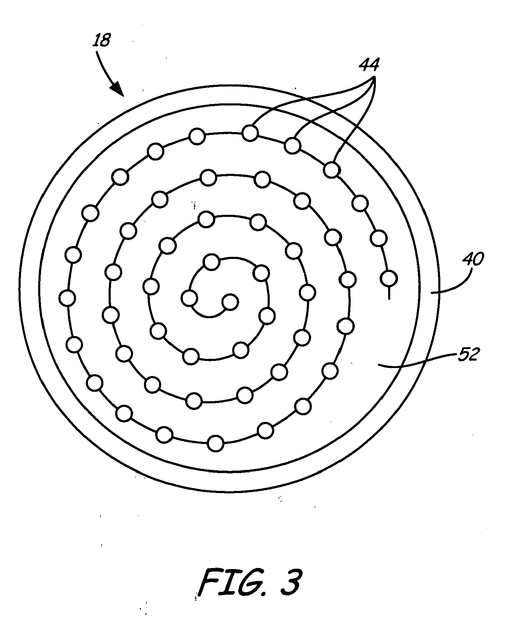

FIG. 3 illustrates a cross-sectional view of one embodiment of membrane distillation module 18. A set (sheet) of hollow fiber membranes 44 is spirally wound within module volume 52. Each hollow fiber membrane 44 is connected to another by a mesh network and the set is wound within module volume 52 to substantially fill module volume 52 with hollow fiber membranes 44. This arrangement provides for easy assembly and sufficient distribution of hollow fiber membranes 44 within module volume 52 so that the feed solution (bore) and distillate (shell) sides of membrane distillation module 18 are uniformly dispersed.

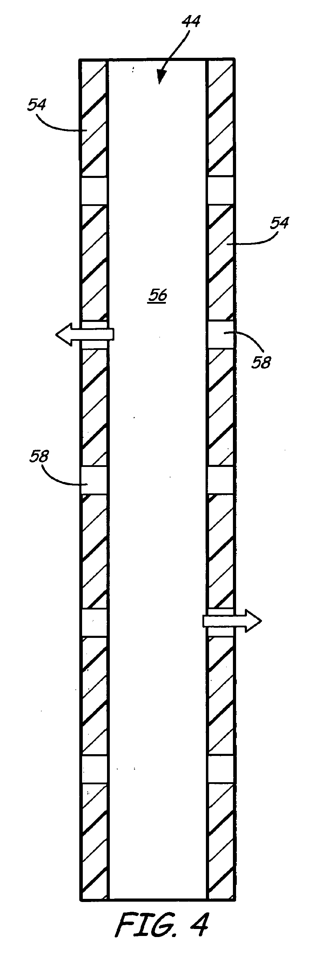

FIG. 4 illustrates an expanded cross-section of one hollow fiber membrane 44 which allows vapor transmission. Hollow fiber membranes 44 are formed from one or more hydrophobic, microporous materials that are capable of separating the distillate from the feed solution via vapor pressure differentials by repelling liquids and keeping liquids from entering membrane pores. Hollow fiber membrane 44 includes a porous membrane wall 54 and inner hollow region 56. Pores 58 within membrane wall 54 allow vapor to pass from the inner bore of hollow fiber membrane 44 across membrane wall 54 and into the distillation side of membrane distillation module 18. Pores 58 allow the transmission of gases and vapors, but restrict the flow of liquids and solids. Pores 58 allow evaporated distillate to separate from the feed solution via vapor pressure transport. Arrows illustrate vapor crossing membrane wall 54 through pores 58.

Examples of suitable materials for membrane wall 54 include hydrophobic polymeric materials, such as polypropylenes, polyethylenes, polytetrafluoroethylenes, polyvinylidene difluorides, Halar® ECTFE (ethylene chlorotrifluoroethylene, available from Solvay Solexis, Brussels, Belgium) and combinations thereof. Hydrophobic materials help prevent distillate in the distillation side of membrane distillation module 18 from crossing membrane wall 54 into inner hollow region 56 of hollow fiber membranes 44. Other suitable materials include non-hydrophobic polymer materials, such as polysulfones, polyethersulfones, and polyimides that are coated with hydrophobic material(s). Examples of particularly suitable materials for membrane wall 54 include thermally-resistant polymeric materials, such as polytetrafluoroethylenes, polyvinylidene difluorides, and combinations thereof. Examples of suitable wall thicknesses for membrane wall 54 range from about 50 micrometers to about 500 micrometers, with particularly suitable wall thicknesses ranging from about 100 micrometers to about 250 micrometers. Examples of suitable average pore sizes for membrane wall 54 range from about 0.01 micrometers to about 0.6 micrometers, with particularly suitable average pore sizes ranging from about 0.1 micrometers to about 0.4 micrometers.

In one embodiment, membrane distillation system 10 utilizes countercurrent flow of the feed solution and the distillate (i.e. the feed solution and the distillate travel through membrane distillation module 18 in generally opposite directions) and bore side feed (i.e. the feed solution is delivered through the bores of hollow fiber membranes 44). Countercurrent flow and bore side feed provide advantages over other membrane distillation flow configurations. Countercurrent flow offers additional heat recuperation benefits. Bore side flow of the feed solution provides reduced concentration polarization compared to shell side flow. Because the feed solution travels through the bore (inner hollow region 56) of hollow fiber membrane 44, the feed solution flows more evenly and uniformly than it would on the shell side of hollow fiber membrane 44.

This more uniform flow offers particular advantages over shell side flow configurations. First, the uniform flow reduces problems associated with concentration polarization. Concentration polarization is inherent in virtually all membrane filtration and distillation processes. Concentration polarization refers to the concentration gradient of solute on a membrane surface created by redilution of the solute left behind as vapor permeates the membrane. In some areas along this boundary layer, the solute concentration exceeds the concentration of the available water. Concentration polarization impacts the performance of membrane distillation by decreasing the vapor pressure at the membrane surface, reducing flux and increasing the probability of scale development. The more uniform flow resulting from bore side feed helps reduce or eliminate the problems associated with concentration polarization. The uniform flow reduces the solute concentration gradient at the membrane surface causing more even distribution of the solute within the bore of hollow fiber membrane 44. As flow uniformity increases, concentration polarization decreases.

Second, the more uniform flow of bore side feed helps to reduce scaling and precipitation potential within membrane distillation module 18. Scale and precipitates can both clog membrane pores, reducing membrane flux and the flow of vapor across the membrane. Ordinarily, scale can develop on the surface of membrane walls due to the crystallization of solid salts, oxides or hydroxides from aqueous solutions, such as magnesium carbonate or calcium sulfate. Over time, undissolved solute builds up on the membrane wall (left behind as vapor crosses the membrane wall) and scale develops and accumulates on the membrane wall. Since much of the feed solution near the membrane wall vaporizes and crosses the membrane wall, there is little opportunity for the undissolved solute to be redissolved by liquid feed solution. This is particularly an issue when the feed solution contains high levels of total dissolved solids (TDS) and/or sparingly soluble salts, such as calcium sulfate and magnesium carbonate. High concentrations of solute require larger volumes of feed solution to redissolve the scale due to solubility limits (i.e. it is more difficult to redissolve the solute as the feed solution approaches the solubility limit for the solute). The more uniform flow within the bore minimizes high localized concentrations of undissolved solute near membrane wall 54. By this action, the uniform flow of the feed solution within the bore of hollow fiber membranes 44 reduces potential precipitation from otherwise high local concentration.

Reducing the scaling potential allows membrane distillation module 18 to operate for longer periods of time between membrane maintenance steps. Membranes that develop scale need to be treated or replaced once scale develops. Membranes with scale have reduced flux that negatively impacts membrane distillation performance and efficiency. Treating or replacing membranes can be a time consuming process and requires stoppage of the membrane distillation system in order to treat or replace membranes within the membrane distillation module. By utilizing bore side feed, membrane distillation module 18 can operate at or near peak performance and efficiency for longer periods of time. A membrane distillation module 18 that requires monthly or semi-annual maintenance can generally produce more distillate at lower cost than a membrane distillation module that requires daily or weekly maintenance.

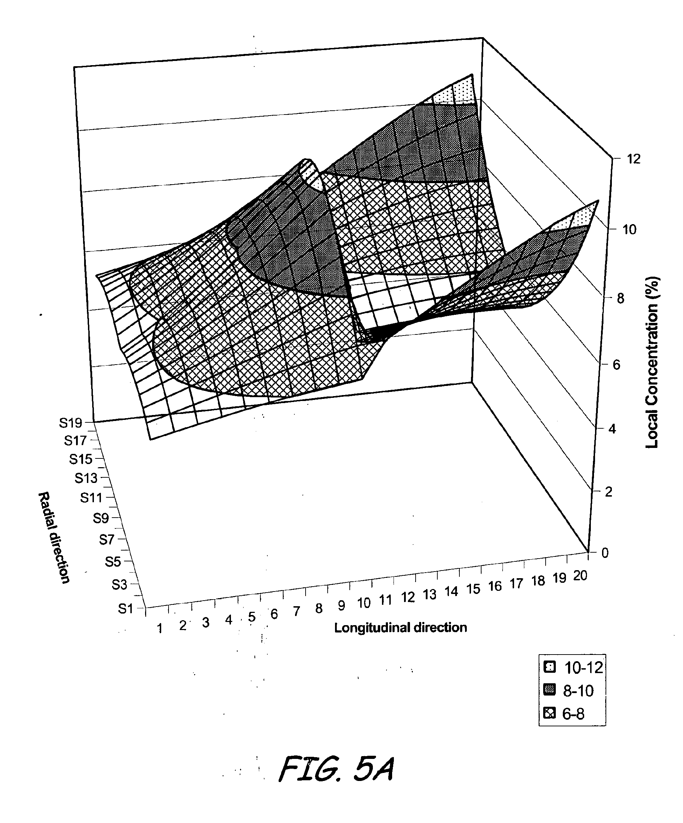

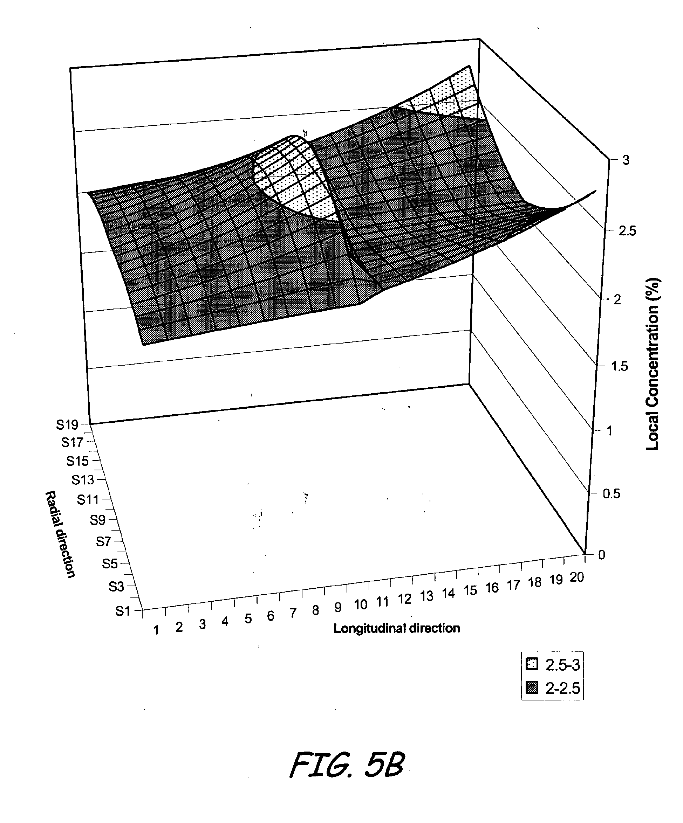

FIG. 5A illustrates a graph showing local solute concentrations on the shell side of a membrane distillation module having shell side feed solution flow and countercurrent flow of the feed solution and the distillate. Here, local solute concentration refers to the solute concentration adjacent the outer wall of the membranes (shell side) near the mouth of a pore. FIG. 5A shows local solute concentrations throughout the shell side of the membranes at various radial and longitudinal locations within the module. In this example, a brine solution with a solute concentration (TDS) of 3.5% was used as the feed solution. The local solute concentrations within the membrane distillation module vary between about 4.5% and 11 %. The graph indicates that a majority of the shell side locations have local solute concentrations greater than 6%. FIG. 5B illustrates a graph showing modeled local solute concentrations on the bore side of a membrane distillation module having bore side feed solution flow and countercurrent flow of the feed solution and the distillate. Here, local solute concentration refers to the solute concentration adjacent the inner wall of the membranes (bore side) near the mouth of a pore. FIG. 5B shows local solute concentrations throughout the bore side of the membranes at various radial and longitudinal locations within the module. The modeling was based upon feed solution, pressure, temperature and flow conditions identical to those used to obtain the results shown in FIG. 5A. The local solute concentrations within the membrane distillation module vary between 2% and about 2.8%. The graph indicates that the solute concentrations are much more uniform down the length of the membrane (i.e. within the bore) for bore side feed flow than the solute concentrations are down the length of the membrane on the shell side for shell side feed flow.

Based on additional modeling results for some feed solutions, membrane distillation system 10 using bore side feed flow can operate with feed solutions having solute concentrations (TDS) as high as about 19% as the feed solution enters membrane distillation system 10. At these solute concentrations, sparingly soluble salts can become problematic. Even with uniform flow through the bores of hollow fiber membranes 44, some sparingly soluble salts (calcium sulfate, magnesium carbonate) are not easily redissolved. However, membrane distillation system 10 can operate with feed solutions having solute concentrations as high as about 14% without the need for high operating (osmotic) pressures. As will be described below, this solute concentration is much greater than that practicable by reverse osmosis alone. In exemplary embodiments for seawater desalination, for example, membrane distillation system 10 operates with feed solutions having solute concentrations (TDS) between about 7% and about 14%.

A goal of many water treatment processes is zero liquid discharge. Zero liquid discharge refers to water treatment processes in which no untreated or remnant liquid is discharged to the environment. Power plants, industrial plants and water treatment facilities use various water treatments, such as water reclamation, wastewater decontamination and water desalination. Many water sources used in power and industrial plants can be decontaminated and reused. Cooling towers are used to transfer waste heat from industrial processes to the environment. Water from cooling tower blowdown typically contains metals or minerals (depending on the water source) that must be removed before the water can be reused. Flue gas contains carbon dioxide and water vapor that can be contaminated with sulfur oxides. A wet scrubber is generally used to clean flue gas of sulfur oxides, other pollutants and dust particles. Wet scrubbing works by contacting the target compounds or particulate matter with a scrubbing solution. In one example, water is sprayed as the flue gas flows up through the scrubber. The sprayed water contacts the sulfur compounds present in the flue gas and dissolves them. Due to the water's weight, the water and dissolved sulfur compounds are removed from the flue gas stream and collect at the bottom of the scrubber. This desulfurization water can be reused following treatment to remove contaminant build-up. Brine, saltwater and brackish water require desalination to expand their potential uses. Each of these wastewater or saltwater streams can be processed with a combination of membrane distillation and other water treatment technologies, such as reverse osmosis or ion exchange, to achieve an economical zero liquid discharge treatment process.

As described above, reverse osmosis is one treatment used to purify and/or decontaminate water. Generally speaking, reverse osmosis can generate product water at a lesser expense than membrane distillation. However, reverse osmosis, when used alone, cannot provide a zero liquid discharge treatment or recover as much water as when reverse osmosis is combined with membrane distillation systems. Once solute concentrations of a feed solution reach between about 5% and about 7%, the pressures required to operate reverse osmosis systems grow too large. Subjecting reverse osmosis membranes to these pressures can cause ripping or tearing of the membranes.

Depending on the water source, a reverse osmosis system can purify or decontaminate between about 50% and about 90% of the water added to the system. For example, seawater has a solute concentration of about 3.5%. For every two liters of seawater, reverse osmosis can generate about one liter of product water and about one liter of concentrated saltwater having a solute concentration of about 7%. Pressure limitations generally prevent reverse osmosis from concentrating seawater above a solute concentration of about 7%. Thus, reverse osmosis can recover about 50% of seawater run through the system. Cooling tower blowdown water contains minerals that corrode or cause scale to form on industrial equipment like heat exchangers. The solute concentration of cooling tower blowdown water is generally between about 0.5% and 1%. For every ten liters of cooling tower blowdown water, reverse osmosis can generate about nine liters of product water and about one liter of concentrated cooling tower blowdown water. Thus, reverse osmosis can recover about 90% of cooling tower blowdown water run through the system.

The concentrated saltwater or wastewater is typically taken from the reverse osmosis treatment system and subjected to additional processing to remove the remaining water from the concentrated stream. Brine concentrators, evaporators, crystallizers and evaporation ponds are frequently used to remove or evaporate any water remaining in the concentrated streams. Brine concentrators and crystallizers can produce a slurry. Evaporators, evaporative crystallizers, filter presses and evaporation ponds can produce dried solids. In some cases, the water from the concentrated stream is not recovered (*e.g.,* evaporation ponds). In other cases, some water is recovered but its recovery increases water treatment costs significantly. Additionally, the size of the brine concentrators, evaporators, crystallizers and evaporation ponds can be quite large depending on the throughput of the reverse osmosis system. Evaporation ponds covering 100 acres are not unheard of for some high throughput water treatment systems. Evaporation ponds of this scale are expensive to construct and maintain, in addition to the cost of the land where they are placed. Reducing the size of brine concentrators, evaporators, crystallizers and evaporation ponds can significantly reduce the costs of water treatment operations.

In addition to potential large scale process requirements, reverse osmosis treatment systems have other drawbacks. First, certain elements, particularly boron and selenium, are not completely removed from product water in reverse osmosis systems. Boron and selenium are able to penetrate through reverse osmosis membranes along with the product water. Boron and selenium limits exist for potable water. For example, seawater contains about 4.6 mg of boron per liter of seawater. Total boron intake for humans generally should not exceed between about 2 and 4 mg per day. Seawater purified only by reverse osmosis may contain too much boron to be used as drinking water. Membrane distillation, on the other hand, is capable of removing boron from a feed solution. Second, the sparingly soluble salts described above also present problems for reverse osmosis systems. Often, the feed solution is chemically modified to form complexes with calcium or magnesium so that the sparingly soluble salts can be filtered out before undergoing reverse osmosis treatment.

In addition to reverse osmosis, ion exchange can also be used to treat feed solutions. In ion exchange treatments, ion-exchange resin- or zeolite-packed columns are used to replace unwanted ions within water. Ion exchange is an exchange of ions between two electrolytes or between an electrolyte solution and a complex. Ion exchange resins can be used to remove toxic ions such as nitrate, nitrite, lead, mercury, arsenic and many others. Like reverse osmosis, ion exchange treatments have certain disadvantages. Ion exchange limitations include difficulty processing solutions with high solute concentrations (TDS) and removing specific ion species. Ion-exchange column capacity can be consumed quickly when using feed solutions with high solute concentrations. Ion-exchange only works well with certain chemical species; ion-exchange does not work for all species of solute. Additionally, an ion-exchange column can be poisoned by some chemical species, reducing the column's effectiveness or rendering it unusable.

The present invention provides for an efficient zero liquid discharge water treatment system capable of producing higher quality product water at reduced costs when compared to present water treatment systems. Membrane distillation system 10 described above can be combined with upstream water treatments to realize additional performance and cost benefits. By combining reverse osmosis or ion exchange treatment with bore side feed membrane distillation, additional water can be recovered, the scale of subsequent processing equipment can be reduced, water generation costs can be reduced and the overall water product can be improved.

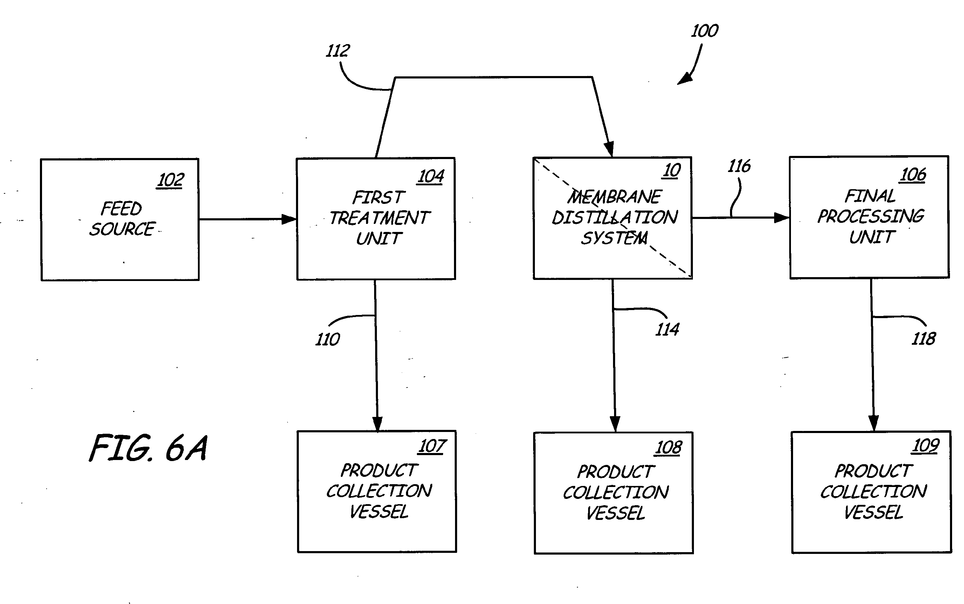

FIG. 6A illustrates a simplified schematic diagram of water treatment system 100. Water treatment system 100 includes feed source 102, first treatment unit 104, membrane distillation system 10, final processing unit 106, and product collection vessels 107, 108 and 109. Though not shown in FIG. 6A, water treatment system 100 can include multiple first treatment units 104, membrane distillation systems 10 and final processing units 106. Feed source 102 provides a feed solution to water treatment system 102. Suitable feed solutions include brine, saltwater, brackish water or wastewater. The feed solution is delivered from feed source 102 to first treatment unit 104.

First treatment unit 104 receives the feed solution and treats it to separate the feed solution into two different streams. The first stream is a (first) product stream. In some embodiments, the product stream is purified water. The second stream is a concentrated feed solution stream. By removing some product from the feed solution, the remaining concentrated feed solution contains higher levels of the salts or contaminants than the initial feed solution. First treatment unit 104 can create the two streams in various ways. In some embodiments, first treatment unit 104 is a reverse osmosis treatment system or an ion exchange system. Other systems capable of pretreating the feed solution or separating the feed solution into a product stream and a concentrated feed solution stream are also possible and within the scope of the present invention. Pretreatment processes and systems include pH or chemical adjustment, chemical complexing or coagulation, filtration, centrifugation, other solids removal processes and combinations thereof and can be added upstream of reverse osmosis or ion exchange systems to improve their operation. The product stream exits first treatment unit 104 through product outlet line 110. The product stream is collected as product in product collection vessel 107. Product collection vessel 107 can be used for short-term or long-term storage of the product water. The concentrated feed solution stream exits first treatment unit 104 through concentrated feed outlet line 112. The concentrated feed solution stream is delivered to membrane distillation system 10.

Membrane distillation system 10 is configured and functions as described above. Membrane distillation system 10 utilizes countercurrent flow and bore side feed due to the high solute concentration of the concentrated feed solution. As described above, membrane distillation system 10 does not suffer from the pressure restrictions that may limit first treatment unit 104 (e.g., reverse osmosis). Additionally, any pretreatment used in first treatment unit 104 (e.g., chemical modification to complex ions, etc.) will not negatively affect membrane distillation system 10. For example, pretreatments that allow reverse osmosis to operate more effectively, such as pH adjustment to maintain carbonic acid solubility or the addition of antiscalants, will also allow downstream membrane distillation system 10 to operate more effectively. No additional treatment of the concentrated feed solution stream is required.

Membrane distillation system 10 receives the concentrated feed solution stream and treats it to separate the concentrated feed solution stream into two more streams. The first stream is a (second) distillate product stream. In some embodiments, the distillate product stream is purified water. The second stream is a superconcentrated feed solution stream. By removing some distillate product from the concentrated feed solution stream, the remaining superconcentrated feed solution contains higher levels of the salts or contaminants than the concentrated feed solution stream. The distillate product stream exits membrane distillation system 10 through distillate product outlet line 114. The distillate product stream is collected as product in product collection vessel 108. Product collection vessel 108 can be used for short-term or long-term storage of the product water. The superconcentrated feed solution stream exits membrane distillation system 10 through superconcentrated feed outlet line 116. The superconcentrated feed solution stream is delivered to final processing unit 106.

Final processing unit 106 receives the superconcentrated feed solution stream and removes the remaining liquid from the superconcentrated feed solution stream. Suitable final processing units 106 include evaporation ponds, cooling crystallizers, evaporative crystallizers, evaporators, brine concentrators, filter presses and combinations thereof. The remaining liquid can be removed from the superconcentrated feed solution, stream by evaporation or crystallization or a combination of the two. In applications in which some of the remaining water is collected by final processing unit 106, the collected water is removed from final processing unit 106 as a (third) product stream. The product stream exits final processing unit 106 through product outlet line 118. The product stream is collected as product in product collection vessel 109. Product collection vessel 109 can be used for short-term or long-term storage of the product water. The solids obtained after liquid removal (i.e. the solute present in the initial feed solution) can be used in other processes or discarded.

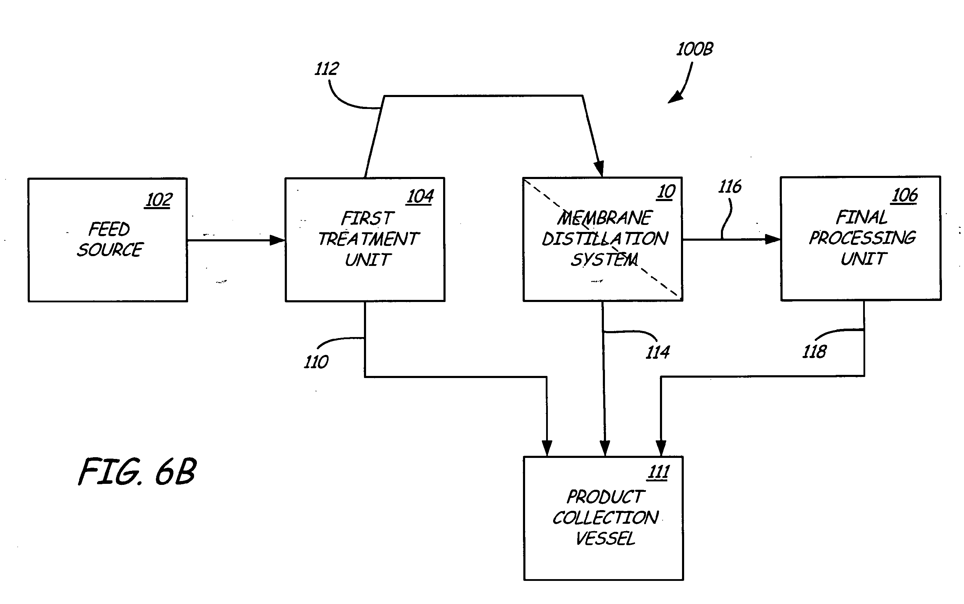

In some embodiments, the available product streams from first treatment unit 104, membrane distillation system 10 and final processing unit 106 can be mixed together and collected as product water. FIG. 6B illustrates a simplified schematic diagram of water treatment system 100B in which the product streams of first treatment unit 104, membrane distillation system 10 and final processing unit 106 are delivered to a single product collection vessel (product collection vessel 111). Product collection vessel 111 can be used for short-term or long-term storage of the product water.

Water treatment system 100 (as well as 100B) allow additional water to be recovered by membrane distillation before the final processing steps that do not allow for water recovery, such as pond evaporation (in final processing unit 106). Because membrane distillation system 10 can operate with feed solutions having higher solute levels than reverse osmosis or ion exchange treatments, more water product can be recovered from the feed solution stream than just using reverse osmosis or ion exchange alone (or in combination). Membrane distillation system 10 is not constrained by the concentration restrictions of reverse osmosis and ion exchange processes. Membrane distillation system 10 can concentrate the feed solution further and recover additional product water when used before a final brine concentrator, evaporative or crystallization step.

The addition of membrane distillation system 10 to water treatment system 100 can also decrease the scale of equipment used for subsequent or final processing. By reducing the volume of feed solution that is not recovered as product, smaller crystallizers, concentrators and evaporation ponds can be used. For example, in a power plant producing about 1140 liters of cooling tower blowdown water per minute, a highly efficient reverse osmosis system can generate about 1026 liters of recovered water and about 114 liters of concentrated feed solution per minute. Instead of sending the 114 liters of concentrated feed solution to an evaporation pond each minute, this feed solution can be further processed using membrane distillation. Membrane distillation system 10 can receive the concentrated feed solution and generate about 103 liters of recovered water and about 11.4 liters of superconcentrated feed solution each minute. Instead of sending about 114 liters of concentrated feed solution to the evaporation pond each minute, only 11.4 liters of superconcentrated feed solution needs to be sent each minute. A smaller evaporation pond can be used to evaporate the smaller amount of residual feed solution. A power plant of the scale just described can eliminate the need to evaporate about 53 million liters of residual feed solution each year. Membrane distillation system 10 can also lower costs by reducing the size of necessary downstream brine concentrators or crystallizers used as final processing units 106. Additionally, membrane distillation system 10 allows for cost saving measures for upstream processing. With downstream membrane distillation, reverse osmosis membranes with lower pressure ratings can be used without sacrificing product quality.

The reduced scale of equipment can significantly reduce installation and operating costs of water treatment systems. If a new water treatment system is constructed, the cost of membrane distillation system 10 is more than offset by the savings afforded by the construction of a smaller evaporation pond. Additionally, since membrane distillation system 10 recovers additional water that can be used in a power or industrial plant, that water can be reused for other purposes within the plant instead of buying additional water for the same purpose. The heat needed to operate membrane distillation system 10 can also be obtained from waste heat sources (spent steam, jacket cooling water, etc.), which are typically available in most power and industrial plants.

The addition of membrane distillation system 10 to water treatment system 100 can also improve the overall product of water treatment system 100. As noted above, reverse osmosis cannot remove all dissolved materials from feed solutions. Boron and selenium are not completely removed by reverse osmosis membranes. Membrane distillation system 10 does not have this limitation and is capable of removing these materials. Mixing the products of a reverse osmosis system and a membrane distillation system can provide a product having lower solute levels than reverse osmosis alone.

Modeling of one embodiment of a desalination water treatment system illustrates some of the advantages of adding membrane distillation. In water treatment system 100, the feed solution is seawater having a solute concentration of about 3.5% is delivered to first treatment unit 104 (a reverse osmosis system). Reverse osmosis system 104 separates the seawater into a product stream having a solute concentration between about 0.02% and about 0.03% and a concentrated feed solution stream having a solute concentration of about 7%. The product and concentrated feed solution streams are generated by reverse osmosis system 104 in approximately equal amounts (i.e. one liter of product for each liter of concentrated feed solution). The concentrated feed solution stream is delivered to membrane distillation system 10. Membrane distillation system 10 separates the concentrated feed solution stream into a distillation product stream having a solute concentration of less than about 0.001% and a superconcentrated feed solution stream having a solute concentration of about 14%. The distillate product and superconcentrated feed solution streams are generated by membrane distillation system 10 in approximately equal amounts (i.e. one liter of distillate product for each liter of superconcentrated feed solution). The superconcentrated feed solution stream is delivered to final processing unit 106. Final processing unit 106 is an evaporation pond where the remaining liquid in the superconcentrated feed solution is evaporated. The (first) product and (second) distillate product streams can be combined. The overall mixed product has a solute concentration between about 0.014% and about 0.02%.

This model illustrates the benefits of membrane distillation in a water treatment process. For every four liters of feed solution delivered to water treatment system 100, three liters of overall product can be collected (two from reverse osmosis and one from membrane distillation). Reverse osmosis alone only provides two liters of product from four liters of feed solution. The overall mixed product is also superior. The reverse osmosis product has a solute concentration between about 0.02% and about 0.03% while the overall product has a solute concentration between about 0.014% and about 0.02% because membrane distillation provides a product with a lower solute concentration. Additionally, only one liter of superconcentrated feed solution from the membrane distillation system is delivered to the evaporation pond instead of two liters of concentrated feed solution from the reverse osmosis system. This allows a smaller evaporation pond to be used for the final evaporation step.

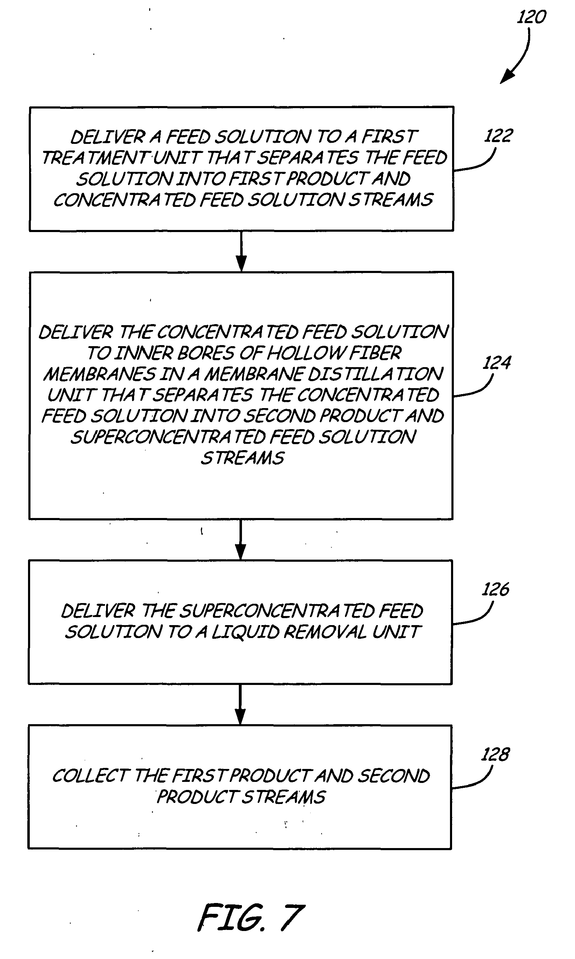

Water treatment system 100 provides for a method for treating a feed solution. FIG. 7 illustrates one such method 120. As described with reference to water treatment system 100 above, method 120 includes several steps. In step 122, feed solution is delivered to a first treatment unit. The first treatment unit separates the feed solution into a (first) product stream and a concentrated feed solution stream. In step 124, the concentrated feed solution stream is delivered to internal bores of hollow fiber membranes in a membrane distillation unit. Vapor from the concentrated feed solution stream passes across membrane walls of the hollow fiber membranes to collect as distillate. The membrane distillation unit separates the concentrated feed solution stream into a (second) distillate product stream and a superconcentrated feed solution stream. In step 126, the superconcentrated feed solution stream is delivered to a final processing unit. The final processing unit removes liquid from the superconcentrated feed solution stream. In some embodiments, the liquid removed from the superconcentrated feed solution stream by the final processing unit is collected as a (third) product stream. In optional step 128, the various (first, second, and third) available product streams are combined to produce a mixed product.

The present invention provides a zero liquid discharge water treatment system and method. The water treatment system and method provides additional water recovery, a potential reduction in scale of subsequent processing equipment, reduced water generation costs and an overall improvement in the quality of water product when compared to current water treatment systems. The present invention provides these benefits by combining reverse osmosis or ion exchange treatment in conjunction with bore side feed membrane distillation.

While the invention has been described with reference to exemplary embodiments, it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A water treatment system comprising:
a feed solution source for providing a feed solution;
a first treatment unit for separating the feed solution into a first liquid product stream and a concentrated feed solution stream containing less than about 7% total dissolved solids by weight; and
a membrane distillation unit for separating the concentrated feed solution stream into a second liquid product stream and a superconcentrated feed solution stream containing at least about 14% total dissolved solids by weight, wherein the membrane distillation unit comprises:
a plurality of hollow fiber membranes spanning the membrane distillation unit, each hollow fiber membrane having an inner bore for receiving the concentrated feed solution stream and a membrane wall allowing vapor transmission of distillate from a bore side of the hollow fiber membrane to a shell side of the hollow fiber membrane.

2. The water treatment system of claim 1, wherein the first treatment unit provides a treatment selected from the group consisting of reverse osmosis, ion-exchange, pH adjustment, chemical complexing, coagulation, filtration, centrifugation and combinations thereof.

3. The water treatment system of claim 1 or 2, wherein the hollow fiber membranes comprise a microporous membrane wall formed from at least one polymeric material selected from the group consisting of polypropylene, polyethylene, polysulfone, polyethersulfone, polyimide, polytetrafluoroethylene, polyvinylidene difluoride, ethylene chlorotrifluoroethylene and combinations thereof.

4. The water treatment system of claim 1, 2 or 3, wherein the hollow fiber membranes have an average micropore size ranging from about 0.01 micrometers to about 0.6 micrometers.

5. The water treatment system of claim 1, 2, 3 or 4, wherein the feed solution source provides a solution selected from the group consisting of brine, seawater, saltwater, brackish water, wastewater, cooling tower blowdown water, flue gas desulfurization wastewater and combinations thereof.

6. The water treatment system of any preceding claim, comprising at least one product collection vessel for receiving at least one product water stream from the first treatment unit or the membrane distillation unit.

7. The water treatment system of any preceding claim, further comprising:
a final processing unit for removing water from the superconcentrated feed solution stream; preferably wherein the final processing unit is selected from the group consisting of evaporation ponds, crystallizers, evaporators, brine concentrators, filter presses and combinations thereof.

8. The water treatment system of claim 7, wherein the final processing unit recovers a third liquid product stream as it removes water from the superconcentrated feed solution stream; and preferably further comprising:
a product collection vessel for receiving the first, second and third liquid product streams.

9. A zero liquid discharge water treatment system comprising a water treatment system as claimed in any preceding claim, the feed solution source comprising:
a water source for providing an aqueous fluid containing dissolved solids;
the first treatment unit for separating the aqueous fluid into a first product water stream and a concentrated aqueous fluid stream containing less than about 7% total dissolved solids by weight; and
the membrane distillation unit for separating the concentrated aqueous fluid stream into a second product water stream and a superconcentrated aqueous fluid stream containing at least about 14% total dissolved solids by weight, each hollow fiber membrane having an inner bore for receiving the concentrated aqueous fluid stream and a membrane wall allowing vapor transmission of water from the bore side of the hollow fiber membrane to the shell side of the hollow fiber membrane.

10. The zero liquid discharge water treatment system of claim 9, wherein the first treatment unit provides a treatment selected from the group consisting of reverse osmosis, ion-exchange, pH adjustment, chemical complexing, coagulation, filtration, centrifugation and combinations thereof.

11. A method for treating a feed solution, the method comprising:
delivering the feed solution to a first treatment unit, wherein the first treatment unit separates the feed solution into a first product stream and a concentrated feed solution stream;
delivering the concentrated feed solution stream to a membrane distillation unit, wherein the concentrated feed solution stream is delivered to internal bores of hollow fiber membranes, and wherein vapor from the concentrated feed solution stream passes across membrane walls of the hollow fiber membranes to collect as distillate, separating the concentrated feed solution stream into a second product stream and a superconcentrated feed solution stream;
delivering the superconcentrated feed solution stream to a liquid removal unit, wherein the liquid removal unit removes any remaining liquid from the superconcentrated feed solution; and

12. The method of claim 11, wherein the first treatment unit provides a treatment selected from the group consisting of reverse osmosis, ion-exchange, pH adjustment, chemical complexing, coagulation, filtration, centrifugation and combinations thereof; and/or wherein the liquid removal unit is selected from the group consisting of evaporation ponds, crystallizers, evaporators, brine concentrators, filter presses and combinations thereof.

13. The method of claim 11 or 12, wherein the concentrated feed solution stream delivered to the membrane distillation unit contains between about 5% and about 7% total dissolved solids by weight; and/or
wherein the superconcentrated feed solution stream delivered to the liquid removal unit contains between about 14% and about 19% total dissolved solids by weight.

14. The method of claim 11, 12 or 13, wherein the remaining liquid removed from the superconcentrated feed solution by the liquid removal unit is collected as a third product stream.

15. The method of claim 14, wherein at least two of the first, second and third product streams are combined to form a mixed product.
